# EUROPEAN PATENT APPLICATION

(11) **EP 0 564 419 A1**
(43) Date of publication of application: **06.10.1993**
(21) Application number: 93830122.3
(22) Date of filing: 29.03.1993
(51) Int. Cl.: B23K 1/00, B23K 1/008, C08B 37/16, A61K 31/72

(54) **Modular heating device and welding machine utilizing said device**

(30) Priority: 01.04.1992 IT MI920779
(71) Applicant: IEMME ITALIA S.p.A., I-20037 Paderno Dugnano (Milan) (IT)
(72) Inventor: Peirano, Arturo, I-20095 Cusano Milanino (Milano) (IT)
(74) Representative: Marietti, Giuseppe

(57) **Abstract**

A device for thermal treatment in machines for remelting welding of electronic components on printed circuit boards of the SMD (Surface Mount Device) type, each arranged in correspondence to relevant thermal treatment areas.

The device comprises one or more heating modules inside each of which a substantially closed circulation of a gaseous fluid is performed, said fluid being used for thermal exchange between a heat source, e.g. an electric resistor, and a printed circuit board on which electronic components are arranged.

In a remelting welding machine equipped with a device for thermal treatment according to the present invention, the temperature control in process step is improved. Moreover, the use of a device according to the invention moreover simplifies the construction and limits the dimensions of the welding machine.

## Description

The present invention concerns a heating device in remelting welding machines, in particular a device inside which, in correspondence with defined areas, a gaseous fluid is recirculated at a preset temperature. Remelting welding is a technique used to weld electronic components on printed circuit boards, specially on printed circuit boards of the SMD type (Surface Mount Devices) that receive electronic components on the same surface comprising the leading tracks. According to a known process, before welding, the connecting bumps on the electric boards receive a certain quantity of a metal compound having low melting point, typically an alloy of tin/lead or other metals. Then the components are arranged on the board in correspondence with the relevant welding positions, namely with the connecting terminals in correspondence with the welding bumps of the leading tracks.

According to said remelting welding technique, the whole group consisting of board and components is then submitted to a thermal treatment, generally performed in machines provided with radiating panels positioned in the vicinity of the area crossed by the boards.

Nevertheless the use of simple radiating panels does not allow uniform heat transmission to the board, often causing excessive overheating localized in given sites thereof and consequently causing damages to the electronic components or to the board itself.

In recent welding machines radiating panels are generally replaced with heating systems that use a flow of gaseous fluid to transmit heat from a source far from the area of the board passage to the board itself. In these machines a circulation of gaseous fluid is performed, namely the fluid, generally consisting of air or inert gases or a mixture of (inert and non inert) gases, is heated by a heat source and conveyed along a circulation path in correspondence with the board, in a such a way as to cause melting of the compound present on the connecting terminals of the electronic components, thus obtaining the welding between terminals and leading tracks. In particular, the thermal treatment comprises several distinct steps, each of which takes place in distinct areas at different temperatures.

Typicallly, the thermal treatment envisages an initial preheating step that involves a slow and gradual increase of the board temperature; subsequently, after an intermediate step at a constant temperature, the board is transferred to a subsequent area where it undergoes the step of main heating that causes the melting of the compound present on the board bumps at the terminals of electronic components, with consequent welding of same to the leading tracks; in the immediately following step the board is cooled, for example by means of an air flow, to solidify the melted material in correspondence with the junctions to be welded.

This process is carried out by using remelting welding machines that generally comprise a mobile conveyor to feed the boards to the subsequent areas of thermal treatment. Above and below the mobile conveyor there are provided devices for heating the boards that typically use radiating panels equipped for instance with electric resistors or, according to more recent developments of this technique, with electric resistors or other suitable heat sources associated with systems for the circulation of gaseous fluids that transmit heat to the boards.

In known machines the gaseous fluid used for thermal exchange is recirculated, say the fluid, after yielding heat to the boards, is reconveyed by a ventilation system to a heat source and therefrom towards the boards again. In the known technique, heating devices are generally arranged in a single upper chamber and in a single lower chamber, each provided with vertical walls that define at least partially the consecutive areas of thermal treatment.

Recirculation takes place by sucking the fluid from one of the chambers, e.g. the lower chamber, and reconveying it through one or more external ducts to the opposite chamber.

The heating devices of this type are however hardly effective in defining distinct areas in which the fluid has different temperatures. This is mainly due to the fact that, according to well known physical laws, fluids at different temperatures tend to rapidly mix along their internal path between the upper and lower chambers, thus making difficult, if not impossible any precise control of fluid temperatures in the different areas. This occurs, even more, if the fluid is recirculated through a single external duct to the chambers for thermal treatment.

The flexibility of the machines of known type is moreover very limited, because, to be able to suit the treatment chambers to different process conditions in the various areas, often not effective artifices must be adopted.

For example, between the pre-heating step and the main heating step, or welding step, the temperature increase to which a board is submitted must be as sharp and rapid as possible; in known machines this is generally obtained by interposing one or more screens that interrupt the recirculating flow in correspondence with the radiating elements in the areas preceding those of main heating. These remedies, in any case of doubtful effectiveness, are also very imprecise, being simple barriers for deviating or cutting off a fluid flow in one or more thermal treatment areas.

An object of the present invention is to provide a heating device that overcomes the drawbaks of the known technique, and therefore a device more effective and practical in use and moreover with better characteristics as far as operating savings and sizes are concerned.

This object is achieved by means of the present invention that concerns a thermal treatment device for remelting welding machines, of the type comprising at least one heating element intercepted by a thermal exchange gaseous fluid, characterized in that it comprises one or more heating modules, and that inside each of them a substantially closed-cycle circulation of said gaseous fluid is performed.

The present invention also concerns a machine for remelting welding of electronic components on printed circuit boards, of the type comprising a mobile conveyor for feeding printed circuit boards, characterized in that it comprises in its upper and/or lower part adjacent to said mobile conveyor, one or more thermal treatment devices of the type as previously described, with the openings of the chambers of relevant modules facing the mobile conveyor and parallel thereto.

In this way a remelting welding machine is obtained with a more effective and precise temperature control and a higher temperature uniformity in each thermal treatment area.

Furthermore the recirculation of the fluid substantially inside each heating module, namely restricted to a single area of thermal treatment, makes the remelting welding process more effective and economic, also allowing to obtain heating devices of more simple construction and reduced sizes.

Futher advantages lie in the modularity of the devices of thermal treatment, since, besides increasing the flexibility of use according to different requirements, it makes the machine maintenance and repairing more simple and economic.

These and other advantages will become more evident from the following description, given by way of illustration and without limiting purposes with reference to the accompanying drawings, wherein:
- figure 1 is a cross sectional view of a heating module according to the invention;
- figure 2 is a plan view of the cross section of the heating module along the line A-A; and
- figure 3 is a schematic cross sectional view of some pieces constituting a remelting welding machine according to a possible embodiment of the present invention.

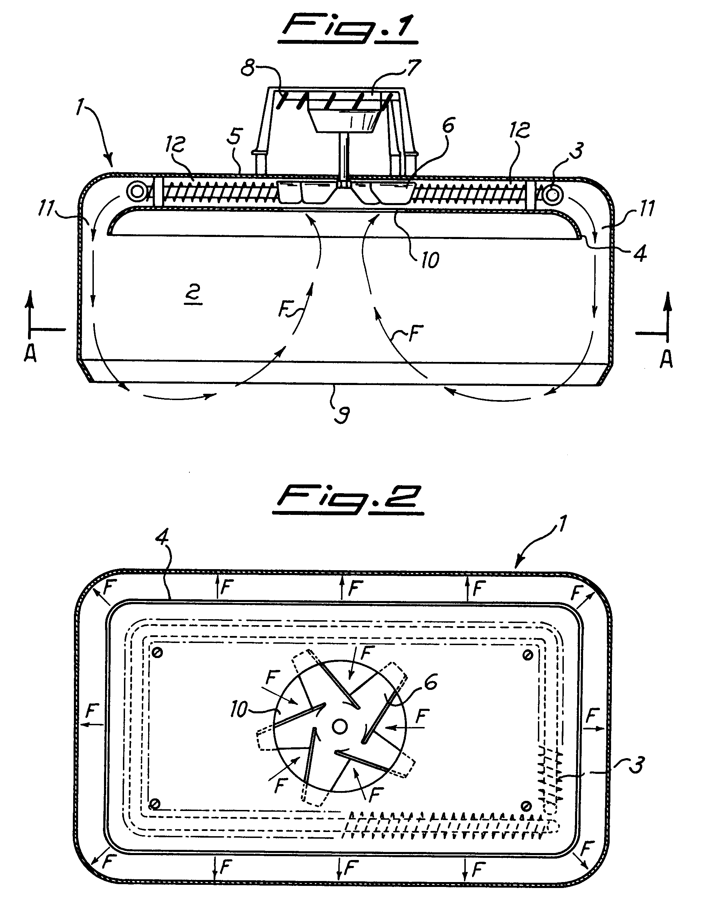

Figure 1 shows the preferential configuration of a heating module 1 that comprises, inside a chamber 2 for the local circulation of a gaseous fluid, at least a heating element 3, at least a screening element 4 fixed in a parallel position with reference to the upper wall 5 of the chamber 2 and spaced therefrom, and at least a fan 6 positioned upstream of the heating element 3 in the direction of the gaseous fluid circulation. The heating element 3 and fan 6 are housed in a hollow space 12 between the screen element 4 and the adjacent wall 5 of chamber 2.

The fan 6 is for instance actuated by an electric motor 7 positioned outside the heating module 1 and possibly provided with a cooling device 8. The heating module 1 is open in correspondence with the wall 9, which is opposite to said wall 5 that is adjacent and parallel to the screen element 4, namely in front of means designed to carry and move the board submitted to thermal treatment.

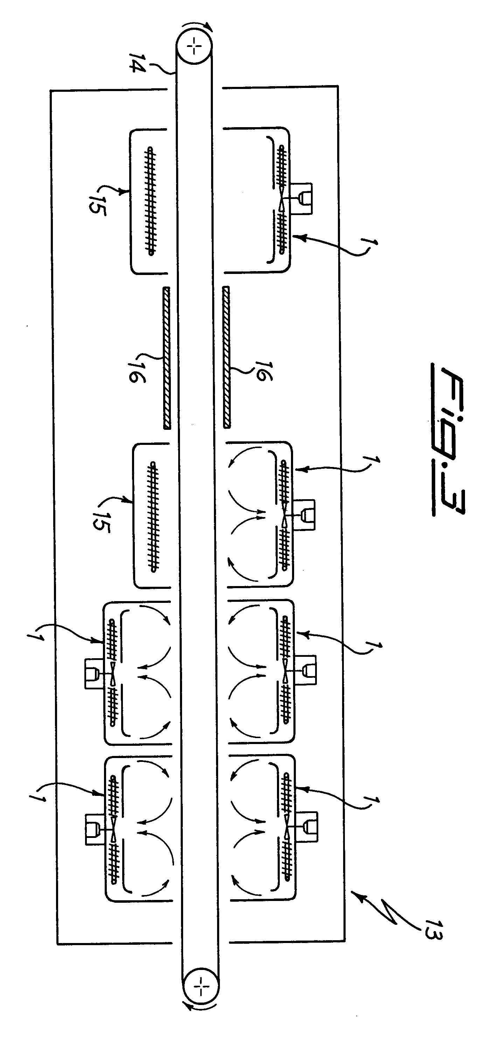

As more clearly shown in figure 2, the screen element 4 has slightly smaller sizes than the parallel and adjacent wall 5, in such a way to leave a passage 11 of substantially uniform width on its own periphery connecting in fluid delivery the hollow space 12 with the inside of chamber 2. The heating element 3 is positioned in correspondence to the whole perimetric edge of said screen element 4 and behind thereto, uniformly spaced from said edge. At the center of the screen element 4, in correspondence to the fan 6, a hole 10 is foreseen to connect in fluid suction the inside of chamber 2 with the hollow space 12.

Inside the module 1 the gaseous fluid is sucked from the chamber 2 by the fan 6 and through the hole 10, and thus it penetrates the hollow space 12 where it intercepts the heating element 3 that brings the gaseous fluid to the selected temperature. The gaseous fluid is then reintroduced into the chamber 2 through the passages 11, and in contacts, in correspondence to the opening 9, the board passing on the mobile conveyor.

The uniform arrangement of the heating element 3 along the whole edge of the screen element 4 allows a uniform heat yielding from the heating element 3 to the gaseous fluid that flows in the hollow space 12. The circulation of the gaseous fluid, schematically indicated by arrows F in figures 1 and 2, takes place by axial suction from chamber 2 to the hollow space 12 through the central hole 10 provided in correspondence to the fan 6 on the screen element 4; circulation goes on by radial delivery from the hollow space 12 to the chamber 2 through the passages 11 between the screen element 4 and the vertical walls of the module.

In this way a circulation of the gaseous fluid with uniform flowrate and temperature is obtained mainly in correspondence to the opening 9, thus making more effective and uniform the heat distribution to the board that passes on the mobile conveyor.

As gaseous fluid, air can be used or preferably inert gases, such as for instance nitrogen, and/or mixtures thereof. In the latter case it is advisable that the welding machine is provided with means to prevent the gaseous fluid from escaping from the devices of thermal treatment in correspondence to the inlet and outlet openings for the boards on the mobile conveyor. Means suitable for this purpose are for instance screens obtained by means of curtains of gaseous fluid at high speed and in a direction parallel to the openings in correspondence to the internal ends of the devices of thermal treatment.

Means (not shown in the figures) for detecting the gaseous fluid temperature inside the chamber 2 are advantageously foreseen; for example thermocouples or the like can be used, arranged in one or more sites of chamber 2 in such a way to allow the detection of the gaseous fluid temperature in one or more points of the circulating flow. Figure 3 schematically represents some parts of a remelting welding machine 13 generally comprising a mobile conveyor 14 for feeding printed circuit boards (not shown) and a plurality of modular units 1, 15 and 16 arranged above and below the conveying grid 14.

According to the present invention the machine 13 is equipped with at least one device for thermal treatment consisting of one or more heating modules 1 as described hereinabove.

For example the device for thermal treatment positioned above the conveying grid 14 (figure 3) comprises four heating modules 1 like that shown in figures 1 and 2, besides a covering plate 16 having plan sizes equal to the sizes of module 1. The device for thermal treatment placed below the conveying grid 14, on the contrary, also comprises heating modules 15 of known type provided with heating elements alone.

It is to be understood that the arrangement of the different modules of figure 3 only represents one of the possible embodiments obtainable by composing units of known type, e.g. 15 and 16, and units 1 similar to the one previously described and represented according to a preferential embodiment in figures 1 and 2.

It is thus possible to obtain devices for thermal treatment with more effective and precise temperature control in each thermal treatment area.

The modularity of the devices for thermal treatment increases the flexibility of use of welding machines and makes possible an easier maintenance or repair of modules. The recirculation of the gaseous fluid inside each heating module improves the efficiency of the remelting welding process, moreover allowing to obtain more simple and compact heating devices.

## Claims

1. A thermal treatment device for remelting welding machines, of the type comprising at least one heating element intercepted by a thermal exchange gaseous fluid, characterized in that it comprises one or more heating modules, inside each of them a substantially closed-cycle circulation of said gaseous fluid is performed.

2. A device according to claim 1, characterized in that each heating module comprises, inside a chamber for a local circulation of the gaseous fluid and open in its bottom part: at least one screen element fixed in a position parallel to an adjacent wall of said chamber and spaced therefrom; and at least a fan placed upstream said heating element with respect to the direction of circulation of the gaseous fluid, said heating element and said fan being housed in a hollow space between said screen element and said adjacent wall of said chamber.

3. A device according to any of the preceding claims, characterized in that each heating module is open in correspondence to the wall opposite to the one parallel and contiguous to said screen element, said opening facing means for the transport of the boards to be welded.

4. A device according to any of the preceding claims, characterized in that said screen element of each heating module has slightly smaller dimensions than those of the wall parallel and contiguous thereto, leaving a passage of substantially uniform width on its periphery to connect in fluid delivery said hollow space with the chamber inside.

5. A device according to any of the preceding claims, characterized in that the heating element of each heating module is positioned in correspondence to the whole perimetral edge of said screening element and behind the latter, uniformly spaced from said edge.

6. A device according to any of the preceding claims, characterized in that said screen element of each heating module is provided with at least a central hole arranged in correspondence to said fan to connect in fluid suction the chamber inside with said hollow space.

7. A device according to any of the preceding claims, characterized in that each heating module comprises means for detecting the temperature of the gaseous fluid inside said chamber.

8. A machine for the remelting welding of electronic components on printed circuit boards, of the type comprising a mobile conveyor for feeding the printed circuit boards, characterized in that it comprises, above and/or below and adjacently to said mobile conveyor, one or more devices for thermal treatment according to the claims 1 to 7 with the opening of the chambers of relevant modules facing said mobile conveyor and parallel thereto.

9. A machine according to claim 8, characterized in that it comprises means to prevent said gaseous fluid to escape from said devices for thermal treatment in correspondence to the openings for the board inlet and outlet on the mobile conveyor.

10. A machine according to one of the claims 8 or 9, characterized in that it comprises at least a system for the independent control of the temperatures in correspondence to one or more modular units of each one of said devices for thermal treatment.
